# EUROPEAN PATENT APPLICATION

(11) **EP 1 125 611 A2**
(43) Date of publication of application: **22.08.2001**
(21) Application number: 01102580.6
(22) Date of filing: 06.02.2001
(51) Int. Cl.: A63F 13/10

(54) **Method and apparatus for communicating with a game character**

(30) Priority: 07.02.2000 JP 2000029297; 05.02.2001 JP 2001027968
(71) Applicant: Sony Computer Entertainment Inc., Tokyo 107-0052 (JP)
(72) Inventor: Mizuno, Kazumi c/o Yuugengaisha Windream, Tokyo 107-0052 (JP); Koike, Akira c/o Sony Computer Entertainment Inc., Tokyo 107-0052 (JP)
(74) Representative: MÜLLER & HOFFMANN Patentanwälte

(57) **Abstract**

A language is defined so as to comprise only syllables each of which corresponds to an operation button of a controller. A player inputs a sentence in the language by operating the buttons. An entertainment apparatus outputs a sound corresponding to the inputted sentence as lines of a player character. Other characters speak lines in the language, and thereby, a conversation by means of sound can be achieved. According to the present invention, a new means for communication between a player and a character is provided in an entertainment apparatus.

## Description

The application claims a priority based on Japanese Patent Application Nos. 2000-29297 and 2001-27968 filed on February 7, 2000 and February 5, 2001 respectively, the entire contents of which are incorporated herein by reference for all purposes.

### BACKGROUND OF THE INVENTION

### FIELD OF THE INVENTION

The present invention relates to a technique used for a game played in an entertainment apparatus, particularly to a technique for achieving a conversation between a player and a character by means of sound in a special artificial language.

### DESCRIPTION OF RELATED ART

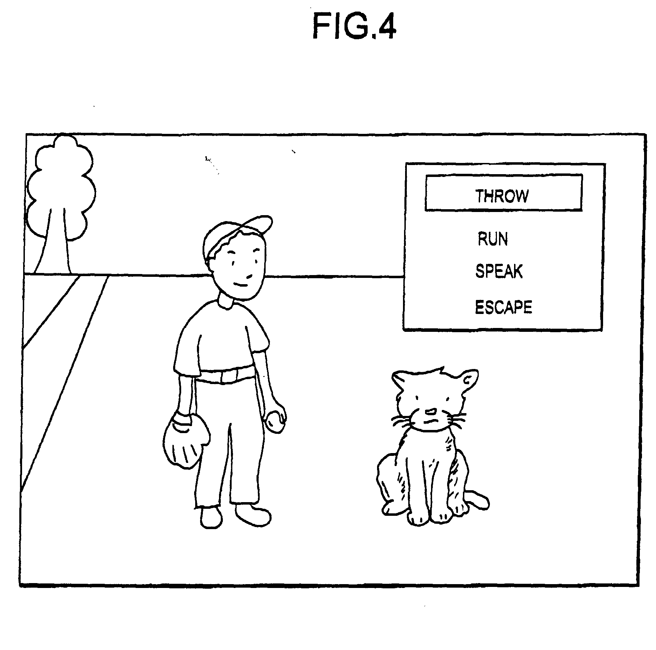

Many role playing games, which form one field of a game carried out in an entertainment apparatus, employ a manner that a player joins a game as one of characters in a story of the game. This type of the games requires an operation of a player through an entertainment apparatus to have a conversation virtually with other characters. This operation is performed conventionally by a player selecting among choices displayed on a screen of a television receiver connected to an entertainment apparatus as shown in Fig. 4. That is, a player should select one displayed choice of actions or conversations to be carried out by a character to designate it by operating a controller connected to an entertainment apparatus. This operation means input of an instruction corresponding to the choice into an entertainment apparatus. Then, the character performs an action in response to the instruction, and the story proceeds.

### SUMMARY OF THE INVENTION

According to such input method, the player can perform only actions displayed as choices. Further, the player cannot feel such that he or she is holding a conversation with another character, since he or she is only available to make a choice of his or her lines to be spoken to another character.

An object of the present invention is to provide a new communication means for having a free conversation with characters appearing in a game by means of sound to proceed with a game.

In order to solve the above problems, in the present invention, it is arranged that syllables correspond to operation buttons of a controller connectable to an entertainment apparatus so that a sound is outputted in accordance with an operation of the buttons by a player, and that a character is made to output a sound produced by a combination of syllables corresponding to the operation buttons, and thereby, a conversation is achieved. Here, the syllable means a unit of a sound as an element constituting a word and provides a feeling of one unified sound.

### BRIEF DESCRIPTION OF THE DRAWINGS

Fig. 1 shows a scene on an entertainment apparatus for describing the present invention.

Fig. 2 illustrates an embodiment of a main body and a controller of an entertainment apparatus used in the present invention.

Fig. 3 shows an internal structure of an entertainment apparatus used for the present invention.

Fig. 4 shows a scene of a game for describing a conventional method for controlling to proceed with a game.

### DETAILED DESCRIPTION OF BEST MODE OF THE INVENTION

An embodiment of the present invention will be described. In this embodiment, the present invention is applied to a role playing game. In this role playing game, a story of the game proceeds by a conversation and the like between a character operated by a player (a player character) and other characters. An artificial language is used for the conversation. The artificial language is here defined to be formed by a combination of a few syllables (for example, 5 syllables). This definition can make a syllable correspond to, for example, an operation button provided in a controller, so that the input of the language may become easier.

First, the artificial language used in this embodiment will be described. The present invention is, however, not limited to the following artificial language. In the following description, the terms such as noun, verb, and object are used as a matter of convenience for explaining the language.

It is assumed here that the language comprises 5 syllables of "ba", "ri", "mu", "do", and "dyu". The word of the language is defined by a combination of 4 syllables of the above "ba", "ri", "mu", and "do". For example, it is assumed that the words "ri-mu" and "ri-ba-ri" of the language mean "price" and "10", respectively. The length of a word is defined to be within 6 syllables for the purpose of simplification.

In the language, a series of 3 words basically forms a sentence. Namely, one sentence is broken down into 3 words. The broken-down words are referred to, from the head, "front word", "middle word", and "rear word". Thus, dividing a sentence into 3 parts basically can make the recognition of the sentence easy.

The "front word" is a noun as a subject of a sentence. The "middle word" is a transitive verb indicating an action of the "front word", or a word indicating a logical relation between the "front word" and the "rear word" (referred to as "logical relative", hereinafter), for example, a word meaning that "(front word) is (rear word)" or that "(front word) is not (rear word)". The "rear word" is an object when the "middle word" is a transitive verb, or a complement when the "middle word" is a logical relative.

A sentence including a verb that does not need an object (such as "I sleep") is expressed in a manner of "I, do, sleep" in which the "rear word" is a verb and the "middle word" is a logical relative. Thus, the logical relative is general and can also express existence and the like. That is, "I, do, forest" can express a meaning of "I am in (will go to) a forest".

The "middle word", namely, a transitive verb and a logical relative of the language comprise fixed 4 syllables length words starting from "do-do", for example, "do-do-mu-ri" that means "look (rear word)", and "do-do-ri-ba" that means "(front word) is (rear word)". "Do-do" should not be included in the words indicating the other part of a sentence in order to break down a sentence into "front word", "middle word", and "rear word".

In the case that the "middle word" or the "rear word" is a verb, the sentence indicates the intention of a speaker when the "front word" is a word denoting a player, and the sentence indicates the request and/or order to a conversation companion when the "front word" is a word denoting the companion.

By adding a syllable "dyu" to the last part of the sentence that is formed in accordance with the grammar, a question sentence is formed.

This language is not so strict since sentences are formed by and in accordance with limited words and rules of grammar. For instance, a sentence "A is 3" can be interpreted as "A is 3 years old", "there are three As", or "I need three pieces", depending on the situation.

A sentence having particular meaning such as an interjection and a response may not follow to the rule of grammar "front word", "middle word", and "rear word". For example, "ba-ba-ba" can mean allowance and "mu-mu-mu" can mean negation.

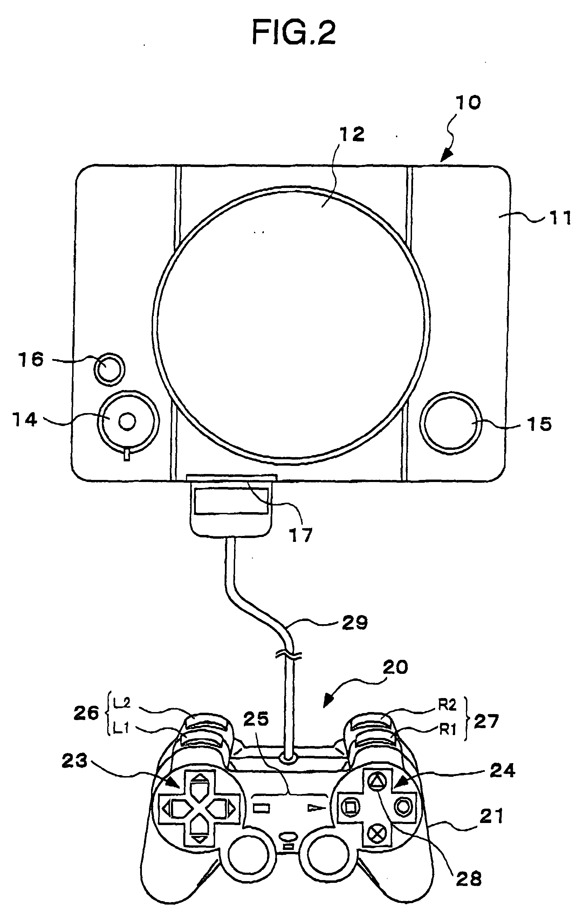

Secondly, an entertainment apparatus to which the present invention is applicable will be described, referring to Fig. 2. The entertainment apparatus is a home information processor for enjoying games, music, images, and so on. The hardware equipment to which the present invention is applicable is, of course, not limited to the entertainment apparatus, as long as it is a program-executing apparatus controllable by a program.

As shown in Fig. 2, an entertainment apparatus 10 comprises a main body 11 and each portion provided on the main body 11. There is a portion provided at the upper center of the main body 11 for loading an optical disc (such as CD-ROM) to supply a game program, and the portion is covered with a CD cover 12. A medium for supplying a game program is not limited to an optical disc, and the way of supplying may be a semiconductor device or a communication line.

A power switch 14, a cover operation switch 15, and a reset switch 16 are provided other than the CD cover 12 at the top surface of the main body 11. A connector 17 is provided on the front side of the main body 11. The connector 17 is connected to a controller 20 via a special cable 29. The plural connectors 17 are provided so that each of them can be connected to the controller 20, respectively.

On the rear side of the main body 11, an external connection unit, which is not shown, is provided to be connected to monitor equipment such as a television receiver, which is an image and sound apparatus, via a predetermined cable. In operating the entertainment apparatus, images are displayed on the image apparatus and sound is outputted from the sound apparatus.

The controller 20 comprises a main body 21 that is also used as a grip, and a group of operation buttons provided thereon. Groups of operation buttons 23 to 27 are provided at the top right and left positions, the top center position, and the front right and left positions of the main body 21, respectively.

The group of operation buttons 23 at the top left position of the main body 21 of the controller includes 4 operation buttons provided in a cross and which correspond to up-down and left-right arrows. The group of operation buttons 24 provided at the top right position includes 4 buttons provided in a cross and which are marked with Δ, O, ×, and □. The group of operation buttons 25 at the top center position comprises a plurality of operation buttons for instructing start or interruption of a game.

The two groups of operation buttons 26 and 27 provided at the front right and left positions of the main body 21 of the controller each comprise two operation buttons L1, L2, and R1, R2 at left and right. The buttons L1, L2, and R1, R2 are located so that the right and left index and middle fingers of a player mainly can operate the buttons when the player grips the main body 21.

To carry out a game program recorded in an optical disc , a player presses a CD cover operation switch 15 of the main body 10 of an entertainment apparatus to open the CD cover 12 so as to load the optical disc containing a game program recorded in a predetermined location. After closing the CD cover 12, the power switch 14 is pressed to turn on the main body 10 of an entertainment apparatus. Then, a program recorded in the optical disc is read into the entertainment apparatus 10. The entertainment apparatus 10 starts a game according to the read program. The information from the entertainment apparatus 10 is outputted by means of images and sound from monitor equipment connected to the outside. Instructions from a player are received through the operation buttons of the controller 20.

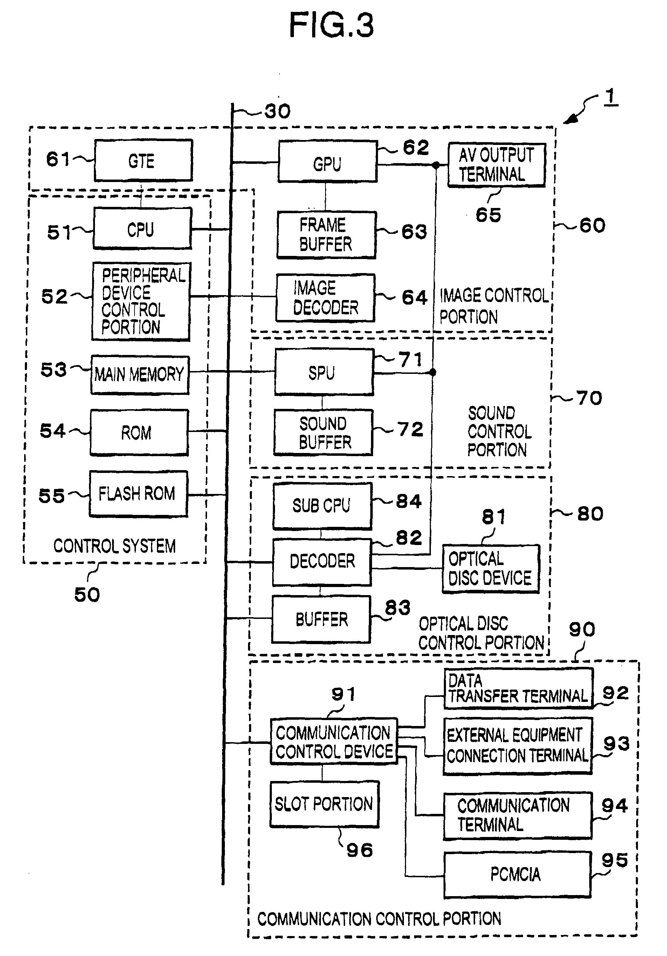

An internal configuration of the entertainment apparatus 10 will be described, referring to Fig. 3. The entertainment apparatus 10 comprises in its inside a control system 50 comprising a central processing unit (CPU) 51 and its peripheral devices, an image control portion 60 comprising a graphics processing unit (GPU) and its peripheral devices, a sound control portion 70 comprising a sound processing unit (SPU), an optical disc control portion 80, and a communication control portion 90.

The control system 50 is provided with a CPU 51, a peripheral device control portion 52 for controlling an instruction from such as a controller 20, a main memory 53 for storing a program recorded in an external storing device, and a read on memory (ROM) 54 containing a program controlling the whole of the main body.

The sound control portion 70 is provided with an SPU 71 for generating a sound, an effects sound and the like on the basis of an instruction from the CPU51, and a sound buffer 72 into which such as waveform data are recorded by the SPU 71. The sound, an effects sound and the like generated by the SPU are outputted from a sound device (speaker) connected to the external connection unit.

The waveform data recorded in the sound buffer are generally digital signals that are AD-converted from sound signals. The digital signals are recorded in an optical disc as a part of a program or as data. The CPU 51 reads out the waveform data through the optical disc control portion 80 and supplies the data to the sound control portion at a time of start or during operation. The SPU 71 processes the supplied waveform data by such as analog conversion to output the processed data to the sound device.

The communication control portion 90 detects information of a condition of the operation buttons provided on the controller 20 connected to a connector 17. The communication control portion 90 transfers the information to the CPU 51. The CPU processes the information according to operation button information on the basis of a program.

Next, a method for proceeding with a game by means of the language will be described. It is assumed that a player knows in advance the grammar and words of the artificial language used in the game. That is, explanation of grammar and a list of words are shown in a manual of the game, for example.

In this embodiment, syllables "ba", "ri", "mu", and "do" are respectively assigned to 4 operation buttons L1, L2, R1, and R2 provided at the front surface of the main body 21 of the controller. A syllable "dyu" is assigned to an operational button indicated by a reference number 28 (an operation button with a mark Δ) in the operation button group 24 on the top surface of the main body 21. A player can input a sentence by operating the above operation buttons.

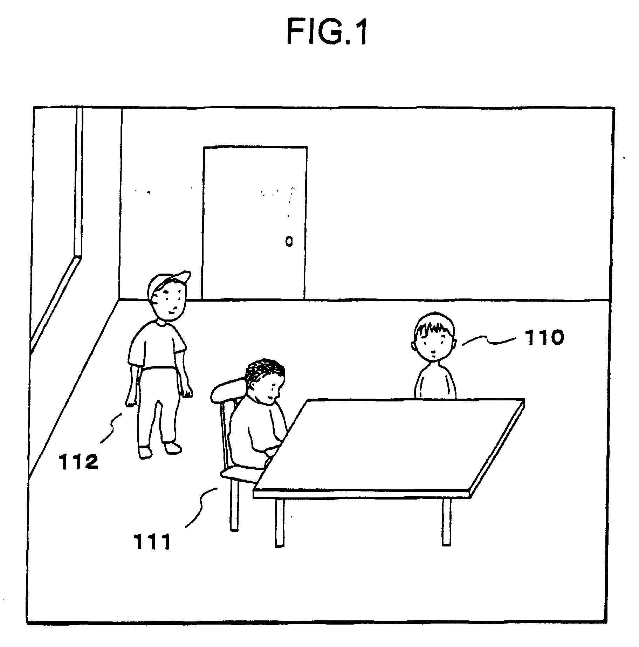

Fig. 1 shows a scene in a game being played. In this scene, three characters 110, 111, and 112 appear. The characters are named "BAMU", "RIMURI", and "MUBARI", respectively. A player joins the game as "BAMU", which is the character 110 located on the right side of the screen 1.

When a player, namely, "BAMU" wants to say to "RIMURI", "look at the outside", the player should input "ri-mu-ri-do-do-mu-ri-ba-ba-ri" by a button operation (L2, R1, L2, R2, R2, R1, L2, L1, L1, L2). It is defined here that "ri-mu-ri" denotes a name; "do-do-mu-ri" denotes a verb that means "look at (rear word)"; and "ba-ba-ri" denotes a word that means "outside". In this embodiment, the sentence expresses a request and/or order since a speaker is different from the "front word".

To make "BAMU" stand up from the chair, a player should input "ba-mu-do-do-ri-ba-ba-ri-ba" by operating the buttons. It is defined here that "ba-mu" denotes a name; "do-do-ri-ba" denotes a logical relative that means "(front word) is (rear word)"; and "ba-ri-ba" denotes a word that means "stand up". In this embodiment, the sentence expresses an intention of the player since the speaker is identical to the "front word".

When "BAMU" wants to ask, "How are you?" to "MUBARI", "mu-ba-ri-do-do-ri-ba-mu-do-ri-ba-dyu" should be inputted by operating the buttons. It is defined here that "mu-ba-ri" denotes a name; "do-do-ri-ba" denotes a logical relative that means "(front word) is (rear word)"; and "mu-do-ri-ba" denotes a word that means "fine". This sentence expresses a question since "dyu" is added at the last.

It is desirable to arrange so that, for example, inputting "ΔΔ" can clear the inputted sentence in case that the player incorrectly operates buttons.

When recognizing pressing of the operation button corresponding to a syllable, the entertainment apparatus 10 outputs a sound corresponding to the syllable from a sound device (speaker). For such output, the waveform data of the sound corresponding to the syllable should be recorded in an optical disc as digital information together with a program. It is desirable that the CPU 51 stores the every waveform data of five sounds in the main memory 53 before starting a game, since the sound corresponding to the five syllables are frequently used.

The CUP 51 detects the pressing of the operation button corresponding to a particular syllable through the communication control portion 90, and then, sends to the SPU 71 the waveform data of a sound corresponding to the syllable. The SPU 71 processes the received waveform data by such as analog conversion to output the data from a sound device as sound data.

On the other hand, the entertainment apparatus 10 outputs any response as lines of another character by means of sound on the basis of a predetermined game story, after receiving the information from a player. This method will be described below.

The lines of another character are registered as waveform data in the data portion that is to be referred to in a program. The waveform data are stored with, for example, an index marked. The lines assumed to be less frequently used may be read out from an optical disc in response to a scene, although it is desirable to read the waveform data of the lines into the main memory in advance.

In developing a role playing game, information possible to be possibly inputted by a player, for example, a content of lines and an instruction of actions are assumed every scene. The assumed information to be inputted is registered in, for example, a data table for every scene so that it can be referred to in a program. Related information concerned with actions of characters corresponding to the inputted information is also registered in the data table. When the information of "speaking lines" is registered as an action of a character in the data table, it should be arranged that an index of the waveform data corresponding to the lines be also registered in the data table.

In carrying out a role playing game, the CPU 51 refers to the data table when a player inputs information, and then, the CPU 51 makes the character perform an action corresponding to the inputted information, so that the game can proceed. When the action of a character here should be "speaking lines" as a result of referring to the data table, the CPU 51 determines the waveform data corresponding to the lines among the indexes of the waveform data recorded in the data table, and then, sends the determined waveform data to the sound control portion 70. The SPU 71 in the sound control portion 70 processes the waveform data by such as analog conversion to output the data as sound data from the sound device.

The above method requires registering the waveform data of a sound of all lines in an optical disc. It is also possible, however, to register encoded syllables of lines for saving a recording area. Three bits can form one syllable since the number of syllables in the language is five. The waveform data of a sound corresponding to each syllable is recorded in the main memory. Therefore, the CPU 51 makes in turn the encoded data of each syllable comprising lines correspond to the waveform data to send the data to the SPU 71, so that the lines can be outputted by means of sound.

For example, preparing the different waveforms of a sound corresponding to each syllable by character enables a player to recognize a speaker by sound, so that the player would be much more interested in the role playing game.

The above description is an exemplification of a scene where a conversation is carried out between a player and a character. It may be arranged that a conversation among players can be held to proceed with a game by connecting the two or more controllers 20 to the main body 11. It may be also arranged that a plurality of apparatuses be connected so as to hold a conversation among players by using a communication function of the entertainment apparatus 10.

As described above, according to the present invention, a player can hold a conversation with a character by means of sound, and thereby, smooth communication in a game can be achieved.

## Claims

1. A recording medium readable by an entertainment apparatus, the recording medium recording a program executable in the entertainment apparatus connectable with a sound output device and a controller provided with a plurality of operation buttons for inputting an instruction from a user, comprising
an area recording a group of sound data for generating a plurality of syllables,
wherein the program allows the entertainment apparatus to execute:
a process for assigning each syllable to the operation button;
a process for, upon detecting the pressing of any of the operation buttons, generating a syllable corresponding to the pressed operation button on the basis of the sound data, and outputting the generated syllable from the sound output device.

2. A recording medium readable by an entertainment apparatus, the recording medium recording a program executable in the entertainment apparatus connectable with a sound output device and a controller provided with a plurality of operation buttons for inputting an instruction from a user, comprising
an area recording a group of sound data for generating a plurality of syllables,
wherein the program allows the entertainment apparatus to execute:
a process for assigning each syllable to the operation button;
a process for, as a sound information from the entertainment apparatus, generating a sound comprising a combination of the syllables on the basis of the sound data, and outputting the generated sound from the sound output device.

3. A program executable in the entertainment apparatus connectable with a sound output device and a controller provided with a plurality of operation buttons for inputting an instruction from a user, wherein the program allows the entertainment apparatus to execute:
a process for referring to a group of sound data for generating a plurality of syllables;
a process for assigning each syllable to the operation button;
a process for, upon detecting the pressing of any of the operation buttons, generating a syllable corresponding to the pressed operation button on the basis of the sound data, and outputting the generated syllable from the sound output device.

4. A program executable in the entertainment apparatus connectable with a sound output device and a controller provided with a plurality of operation buttons for inputting an instruction from a user, wherein the program allows the entertainment apparatus to execute:
a process for referring to a group of sound data for generating a plurality of syllables;
a process for assigning each syllable to the operation button;
a process for, as a sound information from the entertainment apparatus, generating a sound comprising a combination of the syllables on the basis of the sound data, and outputting the generated sound from the sound output device.

5. An entertainment apparatus connectable with a sound output device and a controller provided with a plurality of operation buttons for inputting an instruction from a user, comprising a recording area, wherein,
a group of sound data for generating a plurality of syllables is stored in the recording area,
each of the syllables is assigned the operation button, and
upon detecting the pressing of any of the buttons, a syllable corresponding to the button is generated on the basis of the sound data, and thereby outputting the generated syllable from sound output device.

6. An entertainment apparatus connectable with a sound output device and a controller provided with a plurality of operation buttons for inputting an instruction from a user, comprising a recording area, wherein,
a group of sound data for generating a plurality of syllables is stored in the recording area,
each of the syllables is assigned the operation button, and
a sound comprising a combination of the syllables assigned to the buttons is generated, as a sound information from the entertainment apparatus, on the basis of the sound data, and thereby outputting the generated sound from the sound output device.

7. A method for communicating with a character created in a virtual space by an entertainment apparatus, wherein the method comprises:
a step for storing a group of a plurality of words, which respectively comprise marks selected from a group of a plurality of predetermined marks and which are defined as words each having a special meaning understandable by the entertainment apparatus, sound data for generating an inherent element sound corresponding to each of the marks, and assigning information for uniquely assigning a mark belonging to the group of marks to a plural kinds of input signals externally;
a step for receiving any of one or more marks, which are belonging to the group of marks, inputted externally;
a step for receiving one or more instructions corresponding to a special sound to be externally outputted in relation to the character in the virtual space; and
a step for, with respect to one or more marks, input or instruction of which has been received, generating a signal for outputting an element sound corresponding to the mark to have been received by referring to the assigning information, and thereby outputting the signal.
